Europäisches Patentamt

European Patent Office

Office européen des brevets

(11) Numéro de publication: **0 098 198**

**B1**

(12) **FASCICULE DE BREVET EUROPEEN**

(45) Date de publication du fascicule du brevet: **19.11.87**

(51) Int. Cl.⁴: **H 04 B 14/06, H 04 N 7/13**

(21) Numéro de dépôt: **83401226.2**

(22) Date de dépôt: **14.06.83**

(54) **Procédé et système de compression de débit de données transmises entre au moins un émetteur et un récepteur d'images de télévision.**

(30) Priorité: **25.06.82 FR 8211213**

(43) Date de publication de la demande:
**11.01.84 Bulletin 84/02**

(45) Mention de la délivrance du brevet:
**19.11.87 Bulletin 87/47**

(84) Etats contractants désignés:
**DE GB**

(56) Documents cités:
**DE-A-2 341 172**
**FR-A-2 475 834**
**GB-A-1 415 520**

**IEEE TRANSACTIONS ON ACOUSTICS,
SPEECH AND SIGNAL PROCESSING, vol.
ASSP-29, no. 2, avril 1981, pages 302-310, IEEE,
New York, USA; S.A. TOWNES et al.:**

**"Performance of an ADPCM/TASI system for
PCM speech compression"**

(73) Titulaire: **THOMSON-CSF
173, Boulevard Haussmann
F-75379 Paris Cédex 08 (FR)**

(72) Inventeur: **Catros, Jean-Yves
THOMSON-CSF SCPI 173, bld Haussmann
F-75379 Paris Cedex 08 (FR)**

(74) Mandataire: **Lincot, Georges et al
THOMSON-CSF SCPI 19, avenue de Messine
F-75008 Paris (FR)**

Courier Press, Leamington Spa, England.

## Description

L'invention concerne un procédé et un système de compression de débit de données transmises entre au moins un émetteur et un récepteur d'images de télévision.

En télévision numérique, les signaux de luminance et de différence de couleur sont numérisés à huit éléments binaires par point, avec une structure et une fréquence d'échantillonnage qui dépendent du problème traité. Ces informations sont généralement transmises en temps réel et leur débit brut est très élevé, supérieur à 140 mégabits par seconde, en principe, ce qui impose de réduire leur débit pour pouvoir emprunter les supports de transmission existants.

On connait différents procédés et dispositifs de réduction de débit, par ceux-ci, les procédés de codage par modulation d'impulsions codées différentielles des signaux de télévision sont particulièrement intéressants par leur simplicité de réalisation (GB—A—1 415 520), et ceci d'autant plus que les données transmises sont constituées par des mots de code binaire de longueur fixe, car les problèmes de gestion des mémoires-tampon nécessaires à l'adaptation du débit variable de l'émetteur au débit fixe du canal reliant l'émetteur au récepteur sont éliminés et, de plus, l'emploi d'un codage intra-image permet d'éviter l'emploi systématique de mémoires d'image. Les procédés de codage différentiel connus consistent à coder la différence entre la valeur d'un échantillon du signal et une estimation, ou prédiction, calculée à partir des valeurs des échantillons précédents déjà codés, cette différence étant quantifiée par un quantificateur à n niveaux de quantification. A chaque niveau i est associé un code $C_i$ qui est transmis sur la ligne ou le canal de transmission. Le code reçu est transformé en sa valeur réelle qui est ensuite additionnée à une valeur de prédiction calculée par le récepteur pour reconstituer le signal. Une boucle de contre rèaction permet de réaliser au niveau de l'émetteur une prédiction identique à celle qui est élaborée au récepteur. Selon ce principe, la prédiction est élaborée à l'émetteur à partir de la valeur reconstruite de la valeur échantillonnée, et au récepteur, à partir de la valeur reconstruite de la valeur reçue qui peut évidemment être entachée d'erreur. S'il n'y a pas eu d'erreur de transmission, les valeurs reconstruites et celles des prédictions au niveau de l'émetteur et au niveau du récepteur sont identiques. Dans le cas contraire, les prédictions élaborées au niveau de l'émetteur et au récepteur divergent et des précautions particulières doivent être prises pour éviter le report de l'erreur sur les échantillons suivants reconstitués par le récepteur. Pour réduire la propagation des erreurs de transmission aux échantillons suivants, une solution consiste à quantifier également la prédiction lors du codage et du décodage, l'allocation de code à l'erreur de prédiction quantifiée étant effectuée lors du codage et du décodage en fonction de la prédiction quantifiée. Une erreur de transmission qui entraîne, lors du décodage, une erreur sur la prédiction quantifiée correspondante pour la valeur suivante est compensée par le calcul de l'erreur de prédiction qui tient compte de cette prédiction quantifiée.

Des exemples de réalisation de dispositifs de codage-décodage différentiel de données numériques qui mettent en oeuvre le procédé et la méthode de correction d'erreur susmentionnés sont décrits dans la demande EP—A—0 078 195, publiée le 4.5.1983, déposée au nom de la Demanderesse.

Un problème se pose cependant lorsque l'on cherche à appliquer les méthodes de codage-décodage différentiel à la transmission des images de télévision, notamment, lorsque l'on veut obtenir une compression de débit des données transmises importante, car les procédés de codage-décodage différentiel connus ne permettent pas, même lorsque l'on tend à compenser la manque de définition de l'image obtenue en réception, dû à la réduction importante du nombre de niveaux de quantification, en ajoutant à la donnée à transmettre une donnée pseudo-aléatoire, de descendre en dessous d'un codage à quatre éléments binaires ou bits par point d'image transmis, avec un codage intra-image et un code à longueur fixe pour la composante de luminance. En dessous de cette valeur la qualité de l'image reconstituée n'est plus acceptable.

Une compression de débit importante entraîne en effet des niveaux de quantification espacés, ce qui pose des problèmes de restitution de l'image, à la fois, pour les zones d'image uniformes, et pour les contours de l'image. On constate que dans les zones uniformes de l'image, de faibles variations de luminance sont directement perçues par l'oeil et que par conséquent, il serait préférable de quantifier le signal de luminance des zones uniformes à l'aide de quantificateurs ayant des niveaux reserrés, pour ne pas amplifier exagérement les faibles variations de luminance qui pourraient, laisser apparaître de faux contours au voisinage de l'erreur de prédiction nulle, et que par contre sur les contours de l'image qui marquent la transition entre deux zones uniformes, une quantification, à l'aide de niveau de reconstruction espacés serait préférable pour mieux restituer les contours. Toutefois, dans ce deuxième cas, l'espacement entre deux niveaux ne peut dépasser une certaine limite au delà de laquelle, les contours apparaissent restitués sous forme de paliers ou de marches d'escalier.

L'invention a pour but d'améliorer les procédés et dispositifs de compression de débit pour la transmission des images de télévision existants de façon à permettre des transmission de points d'image codés avec un nombre très réduit de bits, de l'ordre de 3, tout en assurant un qualité de reconstruction de l'image acceptable.

A cet effet, l'invention a pour objet un procédé de compression de débit de données transmises entre au moins un émetteur et un récepteur d'images de télévision, du type consistant à coder à l'émetteur les données à transmettre par un dispositif de codage différentiel comprenant, un prédicteur, un quantificateur, un dispositif de reconstruction de la donnée transmise, et un allocateur de code, à décoder au récepteur les données réçues par un décodeur différentiel comprenant un transformateur de code, et un dispositif de reconstruction de la donnée reçue et à ajouter au niveau de l'émetteur à chaque donnée à transmettre une donnée pseudo aléatoire pour faire osciller autour d'une position moyenne les niveaux de quantification du quantificateur, caractérisé en ce qu'il consiste également à placer au niveau du récepteur un filtre numérique à la sortie du dispositif de reconstruction de la donnée reçue pour filtrer le bruit granulaire parasite des images transmises tout en préservant les contours de l'image, le filtrage du bruit granulaire étant obtenu en détectant les gradients de luminance ou des différences de luminance ou de chrominance interpoints de l'image supérieurs à un seuil prédéterminé pour faire apparaître les points de passage des contours de l'image séparant des zones uniformes de l'image adjacentes et en effectuant pour chaque point une moyenne spatiale des valeurs des échantillons de luminance et ou de chrominance des points voisins situés dans la même zone uniforme que le point considéré.

Selon une autre caractéristique le procédé selon l'invention consiste à utiliser une caractéristique de quantification adaptative qui est une fonction linéaire de la valeur de la prédiction, pour reconstruire au niveau de l'émetteur et au niveau du récepteur chacune des données respectivement transmise et reçue.

L'invention a également pour objet un système de compression de débit de données transmises entre au moins un émetteur et un récepteur d'images de télévision reliés entre eux par un canal de transmission, du type comprenant, du côté émetteur, un dispositif de codage différentiel de la donnée à transmettre comprenant, un prédicteur, un quantificateur, ainsi qu'un dispositif de reconstruction de la donnée transmise, et un générateur de code pseudo-aléatoire relié à un additionneur pour appliquer à l'entrée du dispositif de codage différentiel de l'émetteur une donnée pseudo-aléatoire représentant la somme de la donnée à transmettre avec le code pseudo-aléatoire fourni par le générateur de code pseudo-aléatoire, et du côté récepteur, un dispositif de décodage différentiel de la donnée reçue comprenant un prédicteur et un dispositif de reconstruction de la donnée reçue, caractérisé en ce que la sortie du dispositif de reconstruction de la donnée reçue du récepteur est reliée à un filtre numérique permettant de supprimer le bruit granulaire parasite tout en respectant les contours de l'image, le filtre comprenant un dispositif pour détecter les gradients de luminance interpoints de l'image supérieurs à un seuil prédéterminé pour sélectionner les points situés sur les contours de l'image ainsi que des moyens pour affecter à chaque point de l'image analysée une valeur de luminance et/ou de chrominance correspondant à une moyenne effectuée sur les valeurs de luminance et/ou de chrominance du point analysé avec les points situés dans la zone uniforme de l'image initiale ou d'une image préalablement filtrée entourant chaque point analysé.

D'autres caractéristiques et avantages de l'invention apparaîtront également à l'aide de la description faite en regard des dessins annexés donnés uniquement à titre d'exemple et dans lesquels:

La figure 1 représente un système de compression de débit de données transmises entre un émetteur et un récepteur mettant en oeuvre un dispositif connu de codage-décodage différentiel.

La figure 2 est une représentation graphique des caractéristiques de prédiction adaptatives utilisées pour la mise en oeuvre de l'invention.

La figure 3 représente un mode de réalisation d'un dispositif de codage différentiel selon l'invention.

La figure 4 représente un mode de réalisation d'un dispositif de décodage différentiel selon l'invention.

La figure 5 représente un exemple de réalisation d'un filtre numérique utilisé au niveau de l'émetteur ou du récepteur pour permettre la visualisation des données reçues.

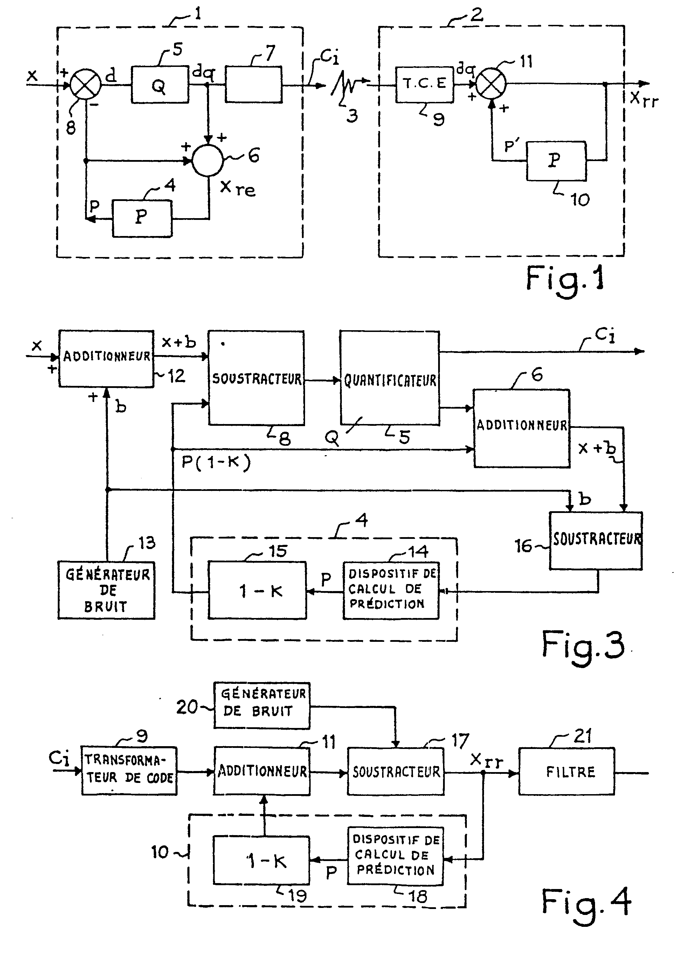

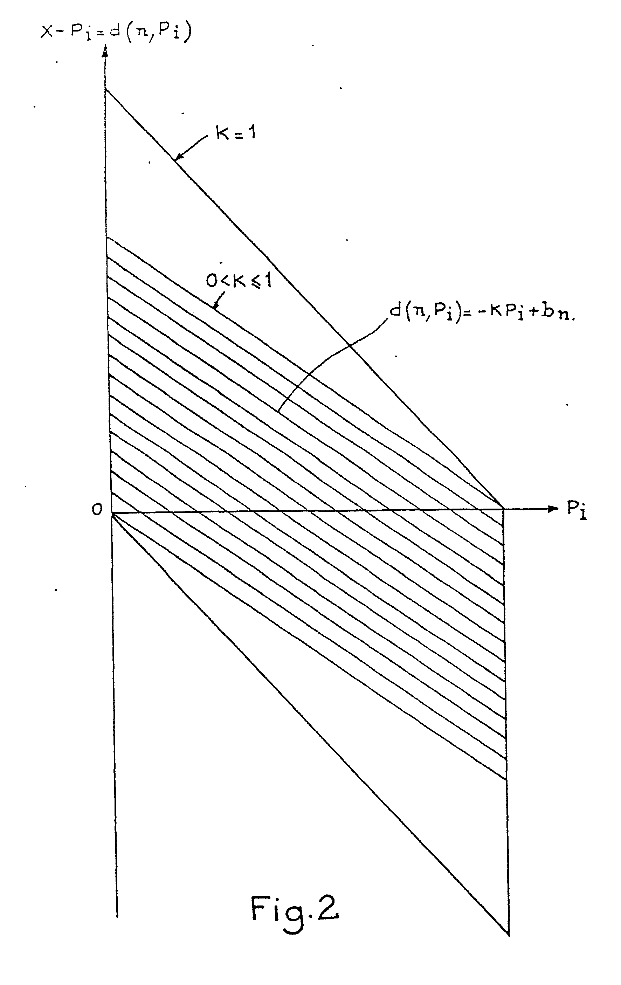

Le système connu de codage-décodage différentiel représenté à la figure 1 est constitué, du côté émetteur, par un dispositif de codage différentiel 1, représenté à l'intérieur d'un rectangle en pointillé, et du côté récepteur, par un dispositif de décodage différentiel 2, représenté également à l'intérieur d'un rectangle en pointillé. La sortie du dispositif de codage 1 est reliée à l'entrée du dispositif de décodage 2 par l'intermédiaire d'un canal de transmission 3. Le dispositif de codage différentiel 1 comprend un prédicteur 4, un quantificateur 5, un dispositif de reconstruction de la donnée transmise 6 ainsi qu'un allocateur de code 7. La donnéee numérique ou analogique X à transmettre est appliquée à l'entrée d'un soustracteur 8 dont l'autre entrée est reliée à la sortie du prédicteur 4. Le prédicteur 4 délivre une valeur de prédiction p. La donnée à coder X diminuée de la valeur de prédiction p est appliquée à l'entrée du quantificateur 5 par la sortie du soustracteur 8 pour être quantifiée selon n niveaux. A chaque niveau i de quantification, un allocateur de code 7 associe un code $C_i$ qui est transmis sur la ligne ou le canal 3. Le niveau dq de quantification délivré par le quantificateur 5 et qui correspond à la différence X-p, est appliqué à l'entrée du dispositif de reconstruction de la donnée transmise 6 généralement constitué par un additionneur, dont l'autre entrée est reliée à la sortie du prédicteur 4. La donnée reconstruite $X_{re}$, transmise à la sortie du dispositif de reconstruction de la donnée transmise 6, est appliquée à l'entrée du prédicteur 4. Le code $C_i$ est reçu par le dispositif de décodage 2 qui est constitué par un transformateur de code 9, un prédicteur 10 et un dispositif de reconstruction de la donnée reçue 11. Le transformateur de code 9 reconstitue les niveaux de quantification dq, pour les appliquer à une première entrée du dispositif de reconstruction de la donnée reçue 11. Le dispositif de reconstruction de la donnée reçue 11, généralement constitué par un additionneur, reçoit sur son autre entrée, la valeur de la prédiction p' calculée par le prédicteur 10 et délivre, sur sa sortie, la valeur $X_{rr}$ de la donnée reconstruite reçue.

L'opération de quantification effectuée par le quantificateur 5 permet d'associer à toutes les valeurs de différence X-p comprises entre deux seuils $S_i$ et $S_{i+1}$ une valeur unique de code $C_i$. Cette opération effectuée avec le concours de l'allocateur de code 7 permet en codage différentiel de réaliser la réduction de débit. Dans le cas où il n'y a pas eu d'erreur de transmission, et comme l'on s'arrange, aussi bien dans le dispositif d'émission que dans le dispositif de réception, pour avoir les mêmes fonctions de prédiction pour les prédicteurs 4 et 10, les valeurs reconstruites respectivement $X_{re}$ et $X_{rr}$ à l'émetteur et au récepteur sont identiques. Dans le cas contraire, évidemment, ces valeurs sont différentes et comme la valeur de prédiction calculée dépend de la valeur reconstruite à l'entrée du prédicteur, on constate qu'en cas d'erreur, les prédictions à l'émetteur et au récepteur divergent. Par conséquent, si aucune précaution n'est prise pour minimiser les erreurs de transmission aux instants de transmission des données suivantes, les données reçues suivantes seront entachées d'erreurs.

Des exemples de réalisation de dispositifs permettant de résoudre ce problème sont décrits dans la demande EP—A—0 078 195, publiée le 4.5.1983, de la Demanderesse. Le système selon l'invention est conforme dans ses généralités au système représenté à la figure 1. Toutefois dans le cadre particulier de réalisation de la présente invention, on pourra utiliser pour allouer les codes $C_i$ en fonction des niveaux de prédiction, une caractéristique de quantification adaptative particulière qui apparaît à la fois simple à mettre en oeuvre, tout en assurant également une bonne protection contre les erreurs de transmission. Elle consiste à déterminer la valeur de la donnée reconstruite, en utilisant une caractéristique adaptative qui est une fonction linéaire de la prédiction. La caractéristique adaptative est définie d'après la relation:

d(n, $p_i$)=$-kp_i$+b(n) k étant inférieur ou égal à 1

n est le code alloué correspondant à un niveau de prédiction $p_i$ et

$b_{(n)}$ représente l'erreur de prédiction pour le niveau de prédiction nul.

Une représentation graphique, sous la forme d'un réseau de droites, de ces caractéristiques, est montrée à la figure 2. Les valeurs de prédiction $p_i$ sont portées en abcisse et les erreurs de prédiction

$$x-p_i=d(n,\ p_i)$$

sont portées en ordonnée. La pente de ces droites est définie par le coefficient k et leur intersection avec l'axe des ordonnées dépend de b(n). Si l'on calcule l'erreur entre les valeurs reconstruites au récepteur et à l'émetteur à l'instant qui suit l'erreur de transmission, les valeurs $X_{re}$ et $X_{rr}$ sont alores définies par les formules:

$$X_{re}=p_i+d(n,\ p_i)=p_i-kp_i+b(n)$$

$$X_{rr}=p_j+d(n,\ p_j)=p_j-kp_j+b(n)$$

et l'erreur est égale à:

$$E=X_{rr}-X_{re}=(p_i-p_j)\ .\ (1-k)$$

Dans le cas particulier où la prédiction est définie à partir de la valeur reconstituée du point précédent, la décroissance de l'erreur $E_{(rT)}$ est égale à:

$$E(rT)=E(r-1)T\ .\ (1-k)$$

soit

$$E(rT)=E(0)\ .\ (1-k)^n$$

où rT, (r−1)T... désignent les instants successifs de transmission qui suivent le premier instant.

Comme k appartient à l'intervalle (0, 1) l'erreur décroît de manière exponentielle plus ou moins vite selon les valeurs de 1−k. En pratique la valeur du coefficient k sera choisie de façon à obtenir des contours d'image qui apparaitront pour un observateur subjectivement les mieux rendus. Si on prend k=1, une erreur de transmission sera sans effet à l'instant de transmission suivant. Le système représenté aux figures 3 et 4 permet d'obtenir ce résultat.

Le dispositif de codage différentiel selon l'invention est représenté à la figure 3. Il comprend comme à la figure 1 un prédicteur 4, un quantificateur 5, un dispositif de reconstruction 6 et un soustracteur 8 pour effectuer la soustraction entre la donnée à transmettre et la valeur de la prédiction calculée par le prédicteur 4. Le soustracteur 8 est connecté par l'intermédiaire d'un additionneur 12 à la sortie d'un générateur de code pseudo-aléatoire ou de bruit 13, tous deux situés dans l'émetteur non représente. La donnée à transmettre X est transmise par l'émetteur, à l'entrée de l'additionneur 12 sont l'autre entrée est connectée à la sortie du générateur de bruit 13 qui délivre une donnée pseudo-aléatoire représentative d'un échantillon de bruit b. La donnée représentant l'échantillon de bruit b est ajoutée à la donnée X à transmettre par l'additionneur 12 et le résultat de l'addition est und donnée aléatoire qui est transmise par la sortie de l'additionneur 12 à l'entrée du soustracteur 8. Le soustracteur 8 reçoit sur son autre entrée la valeur de la prédiction délivrée par le prédicteur 4. Le prédicteur 4 se compose d'un dispositif de calcul de prédiction 14 dont la sortie est reliée à l'entrée d'un multiplicateur 15 par un coefficient 1−k, de la valeur de la prédiction calculée par le dispositif de calcul 14, où k représente la valeur ≤1 du coefficient de la caractéristique adaptative précédemment décrite. La sortie du multiplicateur 15 est reliée à la deuxième entrée du soustracteur 8 pour appliquer, sur cette entrée la valeur de la prédiction calculée par le dispositif 14, multipliée par le coefficient 1−k. La sortie du multiplicateur 15 est également reliée à une première entrée du dispositif de reconstruction 6, constitué par un additionneur dont la deuxième entrée est reliée à une première sortie du quantificateur 5. Le quantificateur 5 délivre, par exemple, une valeur codée sur huit bits correspondant à la valeur quantifiée de l'erreur de prédiction. La sortie de l'additionneur 6 fournit une valeur binaire X+b sur huit bits, correspondant à la valeur de la donnée binaire X à transmettre à laquelle est ajoutée une valeur pseudo-aléatoire délivrée par le générateur de bruit 13. La valeur X+b est appliquée à une première entrée d'un soustracteur 16 dont la deuxième entrée est reliée à la sortie du générateur de bruit 13. La sortie du soustracteur 16 délivre, par conséquent, une valeur $X_{re}$ de la donnée reconstruite, débarrassée de sa composante de bruit à l'entrée du prédicteur 4. L'erreur de prédiction fournie par le soustracteur 8 à l'entrée du quantificateur 5 est codée par ce dernier selon huit niveaux de quantification $S_0$ à $S_7$ et un codeur interne délivre, pour chaque erreur de prédiction comprise entre 2 seuils une valeur binaire $C_i$ codée dans l'exemple sur trois bits. Ce code est transmis sur le canal 3 de transmission à l'entrée du dispositif décodeur différentiel de l'invention représenté à la figure 4.

Le dispositif représenté à la figure 4 comprend outre les éléments 9, 10, 11 représentés à la figure 1, constitués par un transformateur de code 9, un prédicteur 10 et un additionneur 11, les éléments supplémentaires suivants.

Un soustracteur 17 est placé entre les sorties de l'additionneur 11 et du prédicteur 10. Le prédicteur 10 est constitué, comme le prédicteur 4 du dispositif de l'émetteur, par un dispositif de calcul de prédiction 18, relié par son entrée à la sortie du soustracteur 17 et par sa sortie, à l'entrée d'un multiplicateur 19 par un coefficient de multiplication (1−k) dont la sortie, est reliée à une première entrée de l'additionneur 11, la deuxième entrée de l'additionneur 11 étant reliée à la sortie du transformateur de code 9. Un générateur de bruit 20 est placé dans le récepteur et est connecté par sa sortie à une deuxième entrée du soustracteur 17. Le générateur de bruit 20, synchronisé sur celui de l'émetteur, délivre des codes aléatoires sur huit bis à la deuxième entrée du soustracteur 17. La sortie du soustracteur 17 est reliée également à l'entrée d'un filtre numérique 21. Le filtre 21 délivre sur sa sortie la valeur du point à visualiser. Le transformateur de code 9 reçoit, sur son entrée, la valeur du code $C_i$ transmis par le dispositif codeur de l'émetteur et transforme la valeur correspondante codée sur trois bits, en une valeur codée sur huit bits qui correspond à l'erreur de prédiction modifiée

$$X+b-(1-k)p$$

élaborée précédemment dans le dispositif d'émission. La valeur de la prédiction p, élaborée par le dispositif de calcul de prédiction 18 et multipliée par le coefficient 1−k, est additionnée à la valeur codée sur huit bits transmise par le transformateur de code 9, au moyen de l'additionneur 11 qui restitue sur sa sortie la donnée aléatoire X+b. La valeur de bruit b codée sur huit bits correspondante, délivrée par le générateur de bruit 20 est soustraite par le soustracteur 17 de la valeur X+b et le résultat de cette soustraction qui correspond à la valeur de la donnée reçue codée sur huit bits, est transmis par la sortie du soustracteur 17, à l'entrée du prédicteur 10 ainsi qu'à l'entrée du filtre numérique 21.

Le système représenté aux figures 3 et 4 dépourvu du filtre 21, permet tout en utilisant un quantificateur à nombre très réduit de niveaux (8 niveaux), d'obtenir des contours nets de l'image. Cependent le système, en l'absence du filtre 21, ne supprime pas le bruit granulaire parasite qui apparaît sur l'image et qui est principalement visible dans les zones uniformes de celle-ci.

Le filtre 21 a pour rôle de filtrer ce bruit granulaire tout en préservant les contours de l'image. Cette opération s'effectue par une détection des gradients de luminance ou des différences de luminance ou de chrominance interpoints supérieurs à un seuil prédéterminé pour faire apparaître les points de passage des contours de l'image séparant des zones uniformes adjacentes, puis à effectuer pour chaque point une moyenne spatiale des valeurs des échantillons de luminance ou de chrominance donnant l'état des points voisins situés dans la même zone uniforme que le point considéré. Ce filtrage pourra s'effectuer d'abord, selon les directions horizontales de l'image, à l'aide, par exemple, d'une fenêtre entourant le point à filtrer, de longueur L comptée en nombre de points dans les directions horizontales de l'image. Chaque point à filtrer est ensuite remplacé par la moyenne de l'état du point lui-même et de l'état des points voisins situés à l'intérieur de la fenêtre dans la même zone uniforme de l'image à laquelle appartient le point filtré.

Ainsi, par exemple, pour une configuration de points $p_1$ à $p_n$ ayant respectivement les valeurs de luminance $X_1$ à $X_n$, répartis sur une même ligne de l'image, dans des zones uniformes $Z_1$ à $Z_4$ séparées par des contours où le point $p_1$ appartient à une zone uniforme $Z_1$, les points $p_2$, $p_3$ appartiennent à une zone uniforme $Z_2$, les

points $p_4$, $p_5$, $p_6$ appartiennent à une zone uniforme $Z_3$ et les points $p_7$...$p_n$ appartiennent à une zone uniforme $Z_4$, l'opération de filtrage effectuée sur les valeurs de luminance ou de chrominance $X_1$, $X_2$...$X_n$ de chaque point de l'image consiste à exécuter la suite des opérations suivantes:

$$X_{1f}=X_1 \qquad \text{dans la zone } Z_1$$

$$\left.\begin{array}{l} X_{2f}=\dfrac{X_1+X_2}{2} \\[2ex] X_{3f}=\dfrac{X_3+X_2}{2} \end{array}\right\} \text{dans la zone } Z_2$$

$$\left.\begin{array}{l} X_{4f}=\dfrac{X_4+X_5}{2} \\[2ex] X_{5f}=\dfrac{X_4+X_5+X_6}{3} \\[2ex] X_{6f}=\dfrac{X_7+X_8}{2} \end{array}\right\} \text{dans la zone } Z_3$$

$$\left.\begin{array}{l} X_{7f}=\dfrac{X_7+X_8}{2} \\[2ex] \text{etc. ...} \\[1ex] X_{nf}=\dfrac{X^{n-1}+X^n}{2} \end{array}\right\} \text{dans la zone } Z_4$$

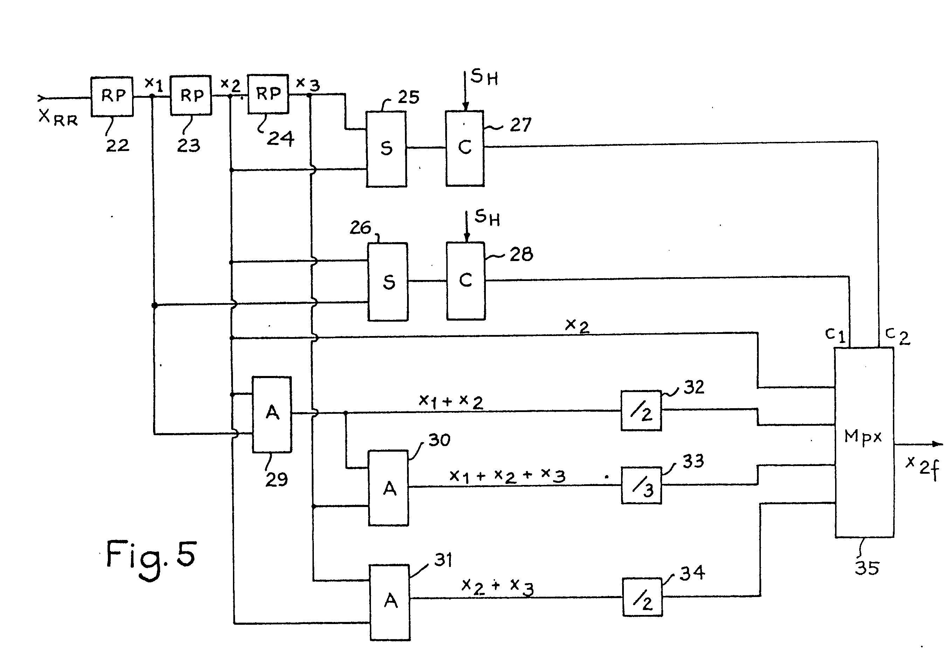

L'exemple de réalisation du filtre de la figure 5 permet d'effectuer des opérations de filtrage qui viennent d'être décrites. Le filtre de la figure 5 se compose de trois registres 22, 23 et 24 ayant chacun une longueur de huit bits et montés en série. Il comprend un dispositif de détection des différences interpoints supérieures à un seuil fixe prédéterminé SH qui est composé des soustracteurs 25 et 26, des comparateurs 27, 28 ainsi que des dispositifs de calcul des valeurs moyennes des points situés dans des zones uniformes, composés des additionneurs 29, 30 et 31 et des diviseurs 32, 33, 34. Un multiplexeur 35, commandé par la sortie des comparateurs 27 et 28, aiguille les sorties des résultats de calcul des valeurs moyennes des dispositifs de calcul 32, 33, 34 à la sortie du filtre 21 en fonction de l'état des comparateurs 27 et 28. La données $X_{rr}$ sur huit bits reçue et reconstruite par le décodeur de la figure 4 est appliquée à l'entrée du registre 22 puis est transmise successivement dans les registres 23 et 24 à la cadence de transmission des données sur le canal de transmission. Le soustracteur 25 a ses deux entrées reliées respectivement aux sorties des registers 23 et 24; il calcule la différence entre les contenus des registres 23 et 24 et le résultat de cette différence est appliqué à l'entrée du comparateur 27 pour être comparé au seuil prédéterminé SH. La sortie du comparateur 27 prend l'état 0 logique lorsque le résultat de la différence des contenus des registres 23 et 24 est inférieur au seuil SH prédéterminé. La sortie du comparateur 27 prend l'état 1 logique lorsque l'écart des contenus des registres 23 et 24 est supérieur au seuil SH prédéterminé. Les entrées du soustracteur 26 sont reliées respectivement aux sorties des registres 22 et 23. Le soustracteur 26 calcule la différence des contenus des registres 22 et 23 et applique le résultat de cette différence à une entrée du comparateur 28 qui compare le résultat obtenu au seuil SH prédéterminé. Le comparateur 28 délivre un signal de niveau 1 logique lorsque la différence des contenus des registres 22 et 23 est supérieure au seuil SH prédéterminé et délivre, par contre, un signal de niveau logique 0 lorsque la différence des contenus des registres 22 et 23 est inférieure au seuil SH prédéterminé. Les entrées de l'additionneur 29 sont reliées respectivement aux sorties des registres 22 et 23, pour additionner le contenu de chacun de ces deux registres et appliquer le résultat de l'addition obtenu, à l'entrée d'un diviseur par deux 32, réalisé par exemple à l'aide d'un registre à décalage. L'additionneur 30 a ses entrées reliées respectivement à la sortie de l'additionneur 29 et à la sortie du registre 24 pour calculer la somme des contenus des registres 22, 23 et 24 et appliquer le résultat obtenu à l'entrée d'un diviseur par trois 33 qui peut être réalisé, par exemple, à l'aide d'une mémoire morte programmable de 1 kilo octets contenant une table de division par 3. L'additionneur 31 a ses deux entrées reliées respectivement à la sortie du registre 24 et à la sortie du registre 23. L'additionneur 31 calcule la somme des contenus des registres 23 et 24 et applique le résultat obtenu à l'entrée d'un diviseur par deux 34 qui peut également être réalisé à l'aide d'un simple registre à décalage. Le multiplexeur 35 comporte quatre entrées qui sont reliées respectivement à la sortie du registre 23, à la sortie du diviseur par deux 32, à la sortie du diviseur par trois 33 et à la sortie du diviseur par deux 34. Les entrées de commande $C_1$, $C_2$ du multiplexeur 35 sont reliées aux sorties respectives des comparateurs 28 et 27. Le contenu du registre 23 est seulement sélectionné par le multiplexeur 35 lorsque les sorties des comparateurs 27 et 28 présentent toutes deux la valeur 1 logique, c'est-à-dire lorsque deux points de la fenêtre de filtrage sont situés de part et d'autre du point à filtrer sur deux zones uniformes différentes de celle du point à filtrer. La sortie du diviseur 32 est sélectionnée lorsque le point correspondant au contenu du registre 24 se trouve dans une zone uniforme adjacente à celle du point à filtrer. La sortie du diviseur 33 est sélectionnée lorsque tous les points de la fenêtre sont situés dans la même zone. Enfin la sortie du diviseur 34 est sélectionnée lorsque le point qui correspond au contenu du registre 22 est situé dans une zone adjacente à celle du point à filtrer. Le filtre représenté à la figure 5 permet par conséquent de supprimer le bruit granulaire qui avoisine chaque point d'une ligne horizontale située sur un contour d'image. Comme le même bruit granulaire existe aussi dans la direction verticale de l'image un filtrage équivalent sera réalisé à l'aide d'un circuit identique à celui de la figure 5 pour supprimer le bruit granulaire dans cette direction en utilisant les valeurs déjà filtrées en horizontal.

Dans une variante de réalisation du filtrage, les deux opérations successives de filtrage pourraient être réduites en une seule, en utilisant un filtre moyenneur bi-dimensionnel respectant les contours de l'image.

Suivant un autre mode de réalisation, le filtre 21 au lieu d'être placé dans le récepteur à la sortie du dispositif de décodage, pourra tout aussi bien être situé dans la boucle de décodage entre la sortie du soustracteur 17 et l'entrée du prédicteur 18, ceci impose de prévoir le même filtre dans la boucle de codage de l'émetteur entre la sortie du soustracteur 16 et l'entrée du prédicteur 4, dans ce cas la valeur de la donnée codée sur trois bits transmise sur le canal de liaison, correspondra à une valeur codée d'un échantillon d'image débarrassée de son bruit granulaire.

On notera encore, également, que suivant un autre mode de réalisation de l'invention, notamment, dans le cas particulier de la transmission des images de télévision, la présence d'un générateur de bruit au niveau du récepteur ne s'impose pas obligatoirement et qu'en son absence la qualité des images reconstruites au récepteur est encore acceptable. Naturellement dans cette situation le schéma de réalisation du système de transmission si simplifie car il n'est plus nécessaire d'utiliser les soustracteurs 16 et 17 des échantillons de bruit à l'émetteur comme au récepteur.

**Revendications**

1. Procédé de compression de débit de données transmises entre au moins un émetteur et un récepteur d'images de télévision, du type consistant à coder à l'émetteur les données à transmettre par un dispositif (1) de codage différentiel comprenant, un prédicteur (4), un quantificateur (5), un dispositif de reconstruction (6) de la donnée transmise, et un allocateur de code (7), à décoder au récepteur les données reçues par un décodeur différentiel (2) comprenant un transformateur de code (9), et un dispositif de reconstruction de la donnée reçue (11) et à ajouter (12) au niveau de l'émetteur à chaque donnée à transmettre une donnée pseudo-aléatoire pour faire osciller autour d'une position moyenne les niveaux de quantification du quantificateur (5), caractérisé en ce qu'il consiste également à placer au niveau du récepteur un filtre numérique (21) à la sortie du dispositif de reconstruction de la donnée reçue pour filtrer le bruit granulaire parasite des images transmises tout en préservant les contours de l'image, le filtrage du bruit granulaire étant obtenu en détectant les gradients de luminance ou des différences de luminance ou de chrominance interpoints de l'image supérieurs à un seuil prédéterminé pour faire apparaître les points de passage des contours de l'image séparant des zones uniformes de l'image adjacentes et en effectuant pour chaque point une moyenne spatiale des valeurs des échantillons de luminance et ou de chrominance des points voisins situés dans la même zone uniforme que le point considéré.

2. Procédé selon la revendication 1, caractérisé en ce qu'il consiste à utiliser une caractéristique de quantification adaptative qui est une fonction linéaire de la valeur de la prédiction, pour reconstruire au niveau de l'émetteur et au niveau du récepteur chacune des données respectivement transmise et reçue.

3. Procédé selon les revendications 1 et 2, caractérisé en ce qu'il consiste à soustraire (16, 17) aux niveau de l'émetteur et du récepteur la même donnée pseudo-aléatoire, de la donnée transmise reconstruite à l'émetteur comme au récepteur pour appliquer à l'entrée de chacun des prédicteurs (4, 10), une donnée reconstruite débarrassée de la donnée pseudo-aléatoire introduite à l'émission.

4. Système de compression de débit de données transmises entre au moins un émetteur et un récepteur d'images de télévision reliés entre eux par un canal (3) de transmission, du type comprenant, du côté émetteur, un dispositif (1) de codage différentiel de la donnée à transmettre comprenant, un prédicteur (4), un quantificateur (5) ainsi qu'un dispositif de reconstruction (6) de la donnée transmise, et un générateur de code pseudo-aléatoire (13) relié à une additionneur (12) pour appliquer à l'entrée du dispositif de codage différentiel (1) de l'émetteur une donnée pseudo-aléatoire représentant la somme de la donnée à transmettre avec le code pseudo-aléatoire fourni par le générateur de code pseudo-aléatoire (13), et du côté récepteur, un dispositif (2) de décodage différentiel de la donnée reçue comprenant un prédicteur (10, 18), et un dispositif de reconstruction (11) de la donnée reçue, caractérisé en ce que la sortie du dispositif (11) de reconstruction de la donnée reçue du récepteur est reliée à un filtre numérique (21) permettant de supprimer le bruit granulaire parasite tout en respectant les contours de l'image, le filtre (21) comprenant un dispositif (25, 26, 27, 28) pour détecter les gradients de luminance interpoints de l'image supérieurs à un seuil prédéterminé pour sélectionner les points situés sur les contours de l'image ainsi que des moyens (29, 30, 31, 32, 33, 34) pour affecter à chaque point de l'image analysée une valeur de luminance et/ou de chrominance correspondant à une moyenne effectuée sur les valeurs de luminance et/ou de chrominance du point analysé avec les points voisins situés dans la zone uniforme de l'image initiale ou d'une image préalablement filtrée entourant chaque point analysé.

5. Système selon la revendication 4, caractérisé en ce qu'il comprend également un soustracteur (16) interposé entre la sortie du dispositif (6) de reconstruction de la donnée transmisé et le prédicteur (4), pour appliquer à l'entrée du prédicteur (4, 14), une grandeur numérique correspondant à la valeur reconstituée de la donnée appliquée à l'entrée du dispositif de codage différentiel, débarassée de la valeur du code pseudo-aléatoire fournie par le générateur de code pseudo-aléatoire (13).

6. Système selon la revendication 5, caractérisé en ce qu'il comprend dans le récepteur un générateur de code pseudo-aléatoire (20) reliée à un soustracteur (17) interposé entre la sortie du dispositif (11) de reconstruction de la donnée reçues et l'entrée du prédicteur (10, 18) du récepteur pour reconstituer la donnée transmise à l'entrée du prédicteur.

7. Système selon l'une quelconque des revendications 4 à 6, caractérisé en ce que l'entrée du dispositif de codage différentiel (1) est constituée par un soustracteur (8) relié par une entrée à la sortie de l'additionneur (12) fournissant la donnée pseudo-aléatoire résultant de la somme de la donnée à transmettre avec le code pseudo-aléatoire fourni par le générateur de code pseudo-aléatoire (13) et reliée par un autre entrée à la sortie du prédicteur (4).

8. Système selon l'une quelconque des revendications 4 à 7, caractérisé en ce que la sortie de prédicteur (4) de l'émetteur est constituée par un multiplicateur (15) par un coefficient 1—k, où k est inférieur ou égal à 1, de la valeur de prédiction calculée par le prédicteur (4, 14) de l'émetteur.

9. Système selon l'une quelconque des revendications 4 à 8, caractérisé en ce que le dispositif (11) de reconstruction de la donnée reçue du récepteur est constitué par un additionneur relié par une entrée au canal de transmission (3) par l'intermédiaire d'un transformateur de code (9) et relié par une autre entrée à la sortie du prédicteur (10) du récepteur.

10. Système selon l'une quelconque des revendications 4 à 9, caractérisé en ce que la sortie du prédicteur (10) du récepteur est constituée par un multiplicateur (19) par un coefficient 1—k, où k est inférieur ou égal à 1, de la valeur de prédiction calculée par le prédicteur (10, 18) du récepteur.

**Patentansprüche**

1. Verfahren zur Kompression der Datenrate von Informationen, die zwischen mindestens einem Sender und einem Empfänger von Fernsehbildern übertragen werden, wobei das Verfahren darin besteht, auf der Sendeseite die zu übertragenden Informationen durch eine Differentialkodierungsvorrichtung (1) zu übertragen, die einen Prädiktor (4), einen Quantifizierer (5), eine Vorrichtung (6) zur Rekonstruktion der übertragenen Information und einen Kodezuordner (7) enthält, auf der Empfangsseite die empfangenen Informationen in einem Differentialdekodierer (2) zu dekodieren, der einen Kodetransformator (9) und eine Vorrichtung (11) zur Rekonstruktion der empfangenen Information aufweist, und auf der Senderseite jeder zu übertragenden Information eine pseudozufällige Information beizufügen (12), um die Quantifikationspegel des Quantifizierers (5) um eine mittlere Position schwanken zu lassen, dadurch gekennzeichnet, daß das Verfahren außerdem darin besteht, auf der Empfangsseite ein Digitalfilter (21) an den Ausgang der Vorrichtung zur Rekonstruktion der empfagenen Information zu legen, um das störende Schneerauschen der übertragenen Bilder auszufiltern und zugleich die Umrisse des Bildes zu. erhalten, wobei die Filterung des Schneerauschens dadurch erreicht wird, daß solche Helligkeitsgradienten oder Gradienten der Differenzen von Helligkeit oder Farbwert zwischen den Punkten des Bildes erfaßt werden, die größer als ein vorgegebener Schwellenwert sind, um die Punkte des Übergangs der Umrisse des Bildes deutlich zu machen, die benachbarte gleichförmige Bildzonen trennen, und daß für jeden Punkt ein räumlicher Mittelwert der Helligkeitswerte oder der Farbwerte der Nachbarpunkte ermittelt wird, die in derselben gleichförmigen Zone wie der betrachtete Punkt liegen.

2. Verfahren nach Anspruch 1, dadurch gekennzeichnet, daß es darin besteht, einen Kennwert der adaptativen Quantifikation zu verwenden, der eine lineare Funktion des Vorhersagewerts des Prädiktors ist, um auf der Senderseite und auf der Empfangsseite jeder der übertragenen bzw. empfangenen Informationen zu rekonstruieren.

3. Verfahren nach den Ansprüchen 1 und 2, dadurch gekennzeichnet, daß er darin besteht, auf der Sender- und Empfangsseite die gleiche pseudozufällige Information von der im Sender wie im Empfänger rekonstruierten übertragenen Information abzuziehen (16, 17), um an den Eingang jedes der Prädiktoren (4, 10) eine rekonstruierte Information anzulegen, die von der auf der Sendeseite zugefügten pseudozufälligen Information befreit ist.

4. System zur Kompression der Datenrate von Informationen, die zwischen mindestens einem Sender und einem Empfänger von Fernsehbildern übertragen werden, welche miteinander über einen Übertragungskanal (3) verbunden sind, wobei auf der Sendeseite eine Vorrichtung (1) zur Differentialkodierung der zu übertragenden Information mit einem Prädiktor (4), einem Quantifizierer (5), sowie einer Vorrichtung (6) zur Rekonstruktion der übertragenen Information, und ein Generator (13) zur Erzeugung eines Pseudozufallskodes vorgesehen sind, der mit einem Addierer (12) verbunden ist, um an den Eingang der Vorrichtung (1) zur Differentialkodierung des Senders eine pseudozufällige Information anzulegen, die die Summe der zu übertragenden Information mit dem vom Pseudozufallsgenerator (13) gelieferten Pseudozufallskode darstellt, und wobei auf der Empfangsseite eine Vorrichtung (2) zur Differentialdekodierung der empfangenen Information vorhanden ist, mit einem Prädiktor (10, 18) und einer Vorrichtung (11) zur Rekonstruktion der empfangenen Information, dadurch gekennzeichnet, daß der Ausgang der Vorrichtung (11) zur Rekonstruktion der empfangenen Information auf der Empfangsseite an ein Digital-filter (21) angeschlossen ist, das die Unterdrückung des störenden Schneerauschens erlaubt und zugleich die Konturen des Bildes respektiert, wobei das Filter (21) eine Vorrichtung (25, 26, 27, 28) zur Erfassung der größeren Helligkeitsgradienten zwischen den Punkten des Bildes als ein vorgegebener Schwellwert zur Selektion der Punkte, die auf den Umrissen des Bildes liegen, sowie Mittel (29, 30, 31, 32, 33, 34) aufweist, um jedem Punkt des analysierten Bilds einen Helligkeits- und/oder Farbwert entsprechend einem Mittelwert zuzuweisen, der aus den Helligkeits- und/oder Farbwerten des analysierten Punkts und der den analysierten Punkt umgebenden Nachbarpunkte gebildet wird, die in der gleichförmigen Zone des ursprünglichen Bilds oder eines vorher gefilterten Bilds liegen.

5. System nach Anspruch 4, dadurch gekennzeichnet, daß es außerdem ein Subtrahierglied (16) aufweist, das zwischen den Ausgang der Vorrichtung (6) zur Rekonstruktion der übertragenen Information und den Prädiktor (4) eingefügt ist, um an den Eingang des Prädiktors (4, 14) eine digitale Größe anzulegen, die dem weidergewonnenen Wert der an den Eingang der Vorrichtung zur Differentialkodierung angelegten Information entspricht, nachdem diese von dem Wert des pseudozufälligen Kodes befreit wurde, der vom Pseudozufallsgenerator (13) geliefert wird.

6. System nach Anspruch 5, dadurch gekennzeichnet, daß es auf der Empfangsseite einen Pseudozufallsgenerator (20) aufweist, der zwischen den Ausgang der Vorrichtung (11) zur Rekonstruktion der empfangenen Information und den Eingang des Prädiktors (10, 18) auf der Empfangeseite eingefügt ist, um die an den Eingang des Prädiktors übertragenen Information wiederherzustellen.

7. System nach einem beliebigen der Ansprüche 4 bis 6, dadurch gekennzeichnet, daß der Eingang der Differentialkodiervorrichtung (1) von einem Subtrahierglied (8) gebildet wird, das mit einem Eingang an den Ausgang des Addierers (12) angeschlossen ist, der die aus der Summe der zu übertragenden Information und des vom Pseubozufallsgenerator (13) gelieferten Pseudozufallskodes, resultierende Pseudozufallsinformation liefert, und mit einem anderen Eingang an den Ausgang des Prädiktors (4) angeschlossen ist.

8. System nach einem beliebigen der Ansprüche 4 bis 7, dadurch gekennzeichnet, daß der Ausgang des Prädiktors (4) auf der Sendeseite von einem Multiplizierer (15) gebildet wird, der den vom Prädiktor (4, 14) des Senders berechneten Vorhersagewert mit einem Koeffizienten 1−k multipliziert, wobei k kleiner oder gleich 1 ist.

9. System nach einem beliebigen der Ansprüche 4 bis 8, dadurch gekennzeichnet, daß die Vorrichtung (11) zur Rekonstruktion der empfagenen Information auf der Empfangsseite von einem Addierer gebildet wird, der mit einem Eingang an den Übertragungskanal (3) über einen Kodetransformator (9) und mit einem anderen Eingang an den Ausgang des Prädiktors (10) des Empfängers angeschlossen ist.

10. System nach einem beliebigen der Ansprüche 4 bis 9, dadurch gekennzeichnet, daß der Ausgang des Prädiktors (10) auf der Empfangsseite von einem Multiplizierer (19) gebildet wird, der den vom Prädiktor (10, 18) des Empfängers berechneten Vorhersagewert mit eine Koeffizienten 1−k multipliziert, wobei k ein Wert kleiner oder gleich 1 ist.

**Claims**

1. A data rate compression method for informations transmitted between at least one transmitter and one receiver of television pictures, consisting in encoding the data to be transmitted on the transmitter side by a differential encoding device (1) comprising a predictor (4), a quantificator (5), a device (6) for reconstructing the transmitted information and a code allocator (7), in decoding the received data on the receiver side by a differential decoder (2) comprising a code transformer (9), a device (11) for reconstructing the received information, and in adding (12) on the transmitter side to each information to be transmitted a pseudo-random information in order to make the quantification levels of the quantificator (5) oscillate about a mean position, characterized in that it further consists in placing a digital filter (21) on the receiver side at the output of the device for reconstructing the received information, in order to filter the parasitic snow noise out of the transmitted pictures while conserving the picture outlines, the filtering of the snow noise being obtained by detecting the gradients of brightness or of differences of brightness or of chrominance between the points of the picture, gradients which exceed a predetermined threshold, in order to render apparent the passage points of the picture outlines separating uniform adjacent picture zones, and by generating for each point a spatial mean value out of the brightness and/or chrominance sample values of the adjacent points situated in the same uniform zone as the considered point.

2. A method according to claim 1, characterized in that it consists in using an adaptable quantification characteristic which is a linear function of the prediction value in order to reconstruct on the transmitter and receiver side each one of the transmitted and received informations respectively.

3. A method according to claims 1 and 2, characterized in that it consists in subtracting (16, 17) on the transmitter and receiver side the same pseudo-random information from the transmitted information which is reconstructed at the transmitter and receiver side, in order to apply to the input of each one of the predictors (4, 10) a reconstructed information which is free from the pseudo-random information introduced on the transmission side.

4. A data rate compression system for informations transmitted between at least one transmitter and one receiver of TV pictures via a transmission channel (3), the system comprising on the transmitter side a differential encoding device (12) for encoding the information to be transmitted, including a predictor (4), a quantificator (5) as well as a device (6) for reconstructing the transmitted information, and a pseudo-random code generator (13) connected to an adder (12) for applying to the input of the differential encoder device (1) of the transmitter a pseudo-random information representing the sum of the information to be transmitted and of the pseudo-random code supplied by the pseudo-random code generator (13), the system comprising on the receiver side a differential decoding device (2) for decoding the received information, including a predictor (10, 18) and a device (11) for reconstructing the received information, characterized in that the output of the device (11) for reconstructing the received information of the receiver is connected to a digital filter (21) allowing the suppression of the parasite snow noise while respecting the picture outlines, the filter (21) comprising a device (25, 26, 27, 28) for detecting the brightness gradients between points of the picture above a predetermined threshold in order to select the points situated on the outlines of the picture, as well as means (29, 30, 31, 32, 33, 34) for attributing to each point of the analysed picture a brightness and/or chrominance value corresponding to a mean value between the brightness and/or chrominance values of the analysed point and of the adjacent points surrounding each analysed point and located in the uniform zone of the original picture or of a previously filtered picture.

5. A system according to claim 4, characterized in that it further comprises a subtractor (16) interposed between the output of the device (6) for reconstructing the transmitted information and the predictor (4), in order to apply to the input of the predictor (4, 14) a digital value corresponding to the reconstituted value of the information applied to the input of the differential encoding device after having been freed of the value of the pseudo-random code supplied by the pseudo-random code generator (13).

6. A system according to claim 5, characterized in that it comprises in the receiver a pseudo-random code generator (20) connected to a subtractor (15) which is interposed between the output of the device (11) for reconstructing the received information and the input of the predictor (10, 18) of the receiver in order to reconstitute the transmitted information at the input of the predictor.

7. A system according to anyone of claims 4 to 6, characterized in that the input of the differential encoding device (1) is constituted by a subtractor (8) connected via one input to the output of the adder (12) supplying the pseudo-random information resulting from the sum of the information to be transmitted and the pseudo-random code supplied by the pseudo-random code generator (13), and connected via another input to the output of the predictor (4).

8. A system according to anyone of claims 4 to 7, characterized in that the output of the predictor (4) of the transmitter is constituted by a multiplier (15) which multiplies the prediction value calculated by the predictor (4, 14) of the transmitter with a coefficient $1-k$, wherein $k$ is $\leqslant 1$.

9. A system according to anyone of claims 4 to 8, characterized in that the device (11) for reconstructing the received information of the receiver is constituted by an adder connected by one input to the transmission channel (3) through a code transformer (9) and connected by another input to the output of the predictor (10) of the receiver.

10. A system according to anyone of claims 4 to 9, characterized in that the output of the predictor (10) of the receiver is constituted by a multiplier (19) which multiplies the prediction value calculated by the predictor (10, 18) of the receiver with a coefficient $1-k$, wherein $k\leqslant 1$.

0 098 198

Fig.1

Fig.3

Fig.4

1

Fig.2

Fig. 5

0 098 198